# EUROPEAN PATENT SPECIFICATION

(11) **EP 0 654 971 B1**
(45) Date of publication and mention of the grant of the patent: **12.09.2001**
(21) Application number: 93916338.2
(22) Date of filing: 18.06.1993
(51) Int. Cl.: A61B 5/00, A62B 9/06, A62B 18/02, G01K 1/14, F16B 2/20

(54) **ATTACHMENT ARRANGEMENT**
FIXATIONSVORRICHTUNG
DISPOSITIF DE MAINTIEN

(30) Priority: 11.08.1992 SE 9202335; 20.10.1992 SE 9203066
(43) Date of publication of application: 31.05.1995
(73) Proprietor: SWEDISH SOPHISTICATED EXPORT INNOVATION AKTIEBOLAG, S-432 96 Askloster (SE)
(72) Inventor: OTTOSSON, Paul, S-432 96 Askloster (SE); SUNDGREN, Uno, S-414 66 Göteborg (SE)
(74) Representative: RACKETTE Partnerschaft Patentanwälte
(86) International application number: PCT/SE93/00545
(87) International publication number: WO 94/04069

(56) References cited:
- DE-A- 2 551 495
- SE-B- 463 494
- US-A- 2 797 682
- US-A- 3 139 088
- US-A- 4 491 426
- US-A- 4 719 911

## Description

The present invention relates to an attachment device for holding an elongated clinical object such as a thermometer or a tube, said attachment device comprising a pressure part and an attachment part, said attachment part is formed by a channel passing through one end of the pressure part, the channel extending in relation to an opposite end of said pressure part to form a space between said opposite end of said pressure part and a plane extending along said channel.

US-A-4,491,426 discloses an attachment device for holding an elongated clinical object such as a thermometer. Said attachment device comprises a pressure part and an attachment part wherein the attachment part is formed by a channel passing through one end of the pressure part. The channel extends in relation to an opposite end of said pressure part to form a space between said opposite end of said pressure part and a plane extending along said channel. The space between said opposite end of said pressure part and the plane extending along said channel is intended to receive the tongue of an individual which comes in contact with the sensitive part of the thermometer whereas the attachment part is fixed between the teeth. However, for fixing this attachment device within the mouth, the individual has to be conscious in order to clamp the attachment device with his teeth.

US-A-5,097,827 discloses an attachment device for holding a tube as an elongated clinical object comprising an elongated pressure part. An attachment part of the attachment device for holding the clinical object is located opposite to the elongated pressure part. The pressure part and the attachment part are connected by means of a contiguous neck portion. The attachment part exhibits a cylindrical tube holder portion for receiving the tube. This known clip-like attachment device is to be used to fix the tube on a patient septum. Also working quite well in this specific kind of use it has been found, that it is quite difficult to fix the known attachment device to other orifices of a body defined by a rim of body tissue.

The measurement and recording of the body temperature is performed in hospitals and other health examination facilities for ethical, hygienic, nosocomial and practical reasons with the aid of a thermometer for oral or axillary temperature measurement. It may be difficult, however, for certain persons who are fully conscious to keep the thermometer in their mouth for a certain period of between ca. 10 and 30 seconds during measurement. Measurement at a specific point inside the mouth is then not so easy to achieve.

It has been found that the measurement of temperature is particularly effective in the area of a person's molar teeth, at a distance from the mouth, which accordingly does not necessarily have to be fully closed in order to prevent interference with the measurement by colder air from outside. etc.

The thermometer is an important clinical diagnostic instrument for the care and investigation of patients, both in out-patient and institutional medical care. Fever reactions in the patients are able to provide valuable information about the type and degree of any illness, and temperature measurements at frequent intervals provide the opportunity to study the course of illnesses, when the effect of any therapy, etc., used can be evaluated objectively. The resulting temperature curve is an indispensable diagnostic guide in post-operative monitoring, for which reason frequent measurement and recording of the patient's body temperature is a routine procedure including in surgical wards and intensive care wards. Not only must the method of measurement be reliable, rapid and precise, but it must also be practically simple to execute and "pain-free" and comfortable for the patient.

Previously disclosed means for the attachment of thermometers, probes, tubes and similar objects have consisted of tape, wadding, bite blocks and the like, which have been found difficult to use with regard to their application, use and removal.

Thus it is an object of the present invention to give attachment device of the above kind presenting a secure attachment and even in the case of unconsciousness a good adaptability to different kind of orifices or of orifices with different dimensions.

This object is accomplished by an attachment device of the above kind characterized in that the pressure part exhibits friction-increasing means at a contact surface to the skin of an individual.

The present invention is described below as a number of preferred illustrative embodiments, in conjunction with which reference is made to the accompanying drawings, in which:
Fig. 1 shows an attachment arrangement for an instrument for measuring body temperature viewed in perspective in an empty position;
Fig. 2 shows the attachment arrangement with a thermometer in place in a position ready for attachment;
Fig. 3 shows the attachment arrangement in question in an attached position inside the mouth of a person;
Fig. 4 shows a second illustrative embodiment of an attachment arrangement in an attached position with a measurement sensor held in place;
Fig. 5 shows a side view of an arrangement in an attached position inside the mouth of a patient;
Fig. 6 shows an example of an attachment arrangement for a tube in a nose, view from the outside from the side;
Fig. 7 shows the tube attachment device in the attached position as a perspective view from the front;
Fig. 8 shows a further example of an attachment arrangement;
Fig. 9 shows a further example of a thermometer and its attachment arrangement;
Fig. 10 shows said further thermometer in a position in use on a person;
Fig. 11 shows the thermometer in a separated position;
Fig. 12 shows the thermometer from its inside;
Fig. 13 shows a part of the thermometer attachment arrangement intended to be introduced into the mouth;
Figs. 14-16 show variants of attachment arrangements for tubes and probes, etc.; where

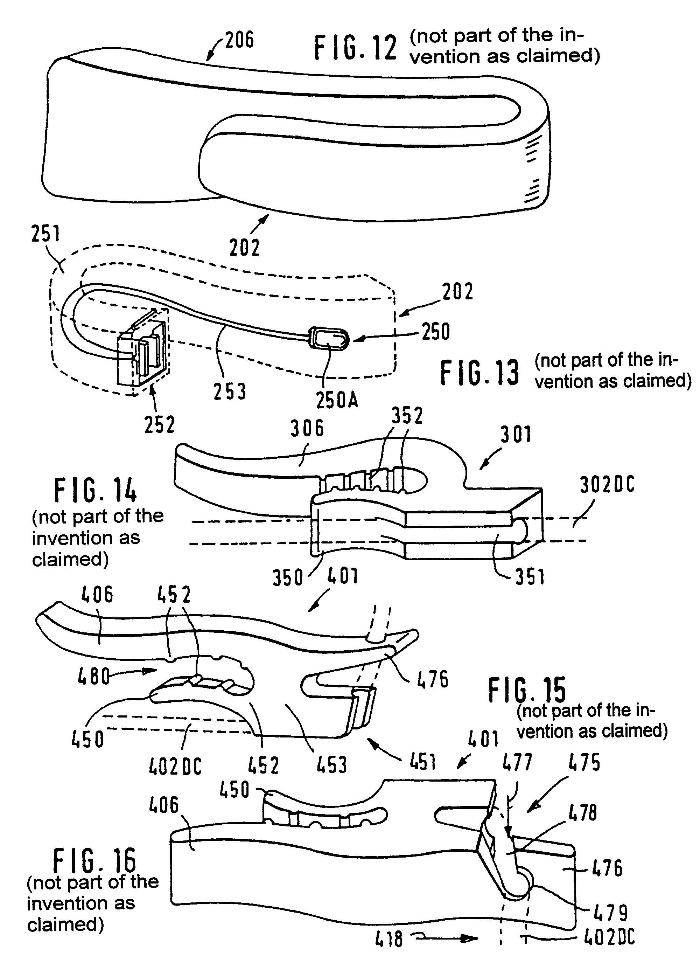

Fig. 14 shows an embodiment for the longitudinal accommodation of an object;

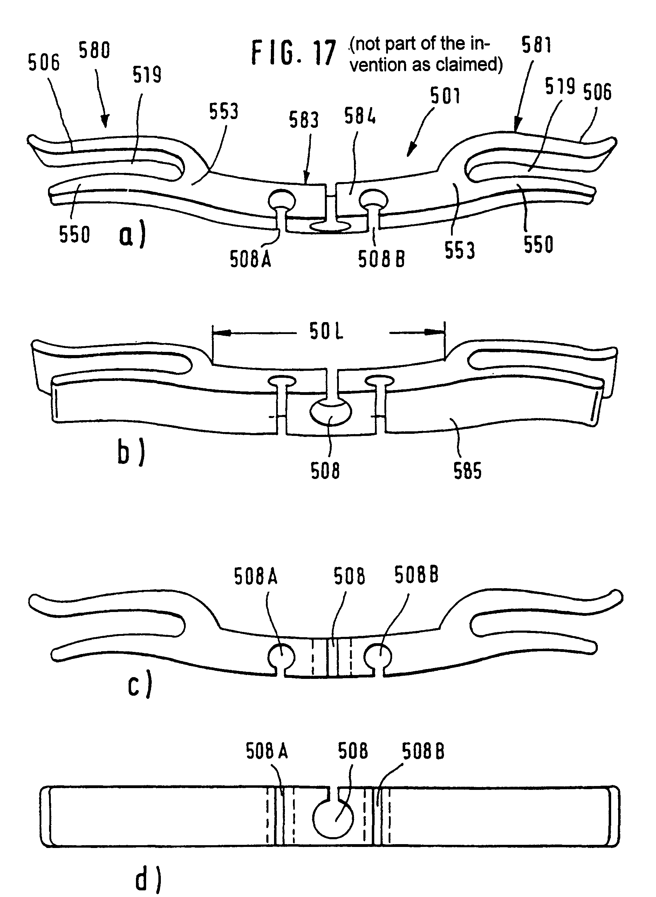

Figs. 15-16 show a further embodiment of an attachment arrangement for the accommodation of objects lying in a transverse direction, which it is wished to attach;
Fig. 17 shows in various positions an embodiment of an attachment arrangement for accommodating both a mouth/stomach probe and a nasal probe;

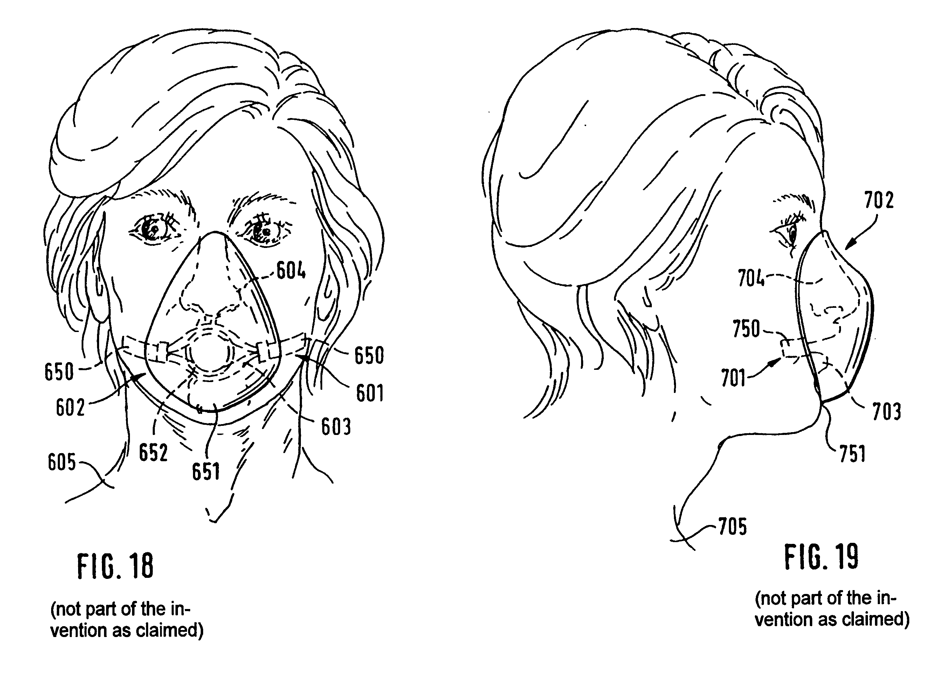

Fig. 18 shows a front view of a breathing mask in a position attached to a person;
Fig. 19 shows a protective mask attached to the mouth and nose of a person;

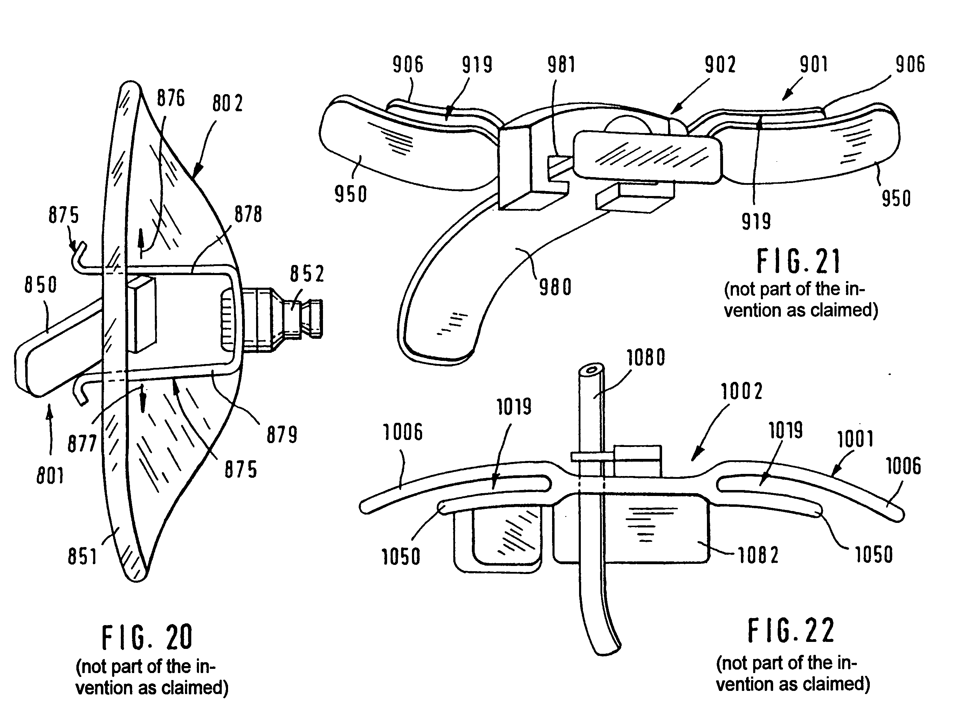

Fig. 20 shows a side view of a breathing mask with an integral mouth-opening arrangement;
Fig. 21 shows an example of a probe holder with an integral tongue holder; and
Fig. 22 shows a longitudinal view of a probe holder with an integral bite block.

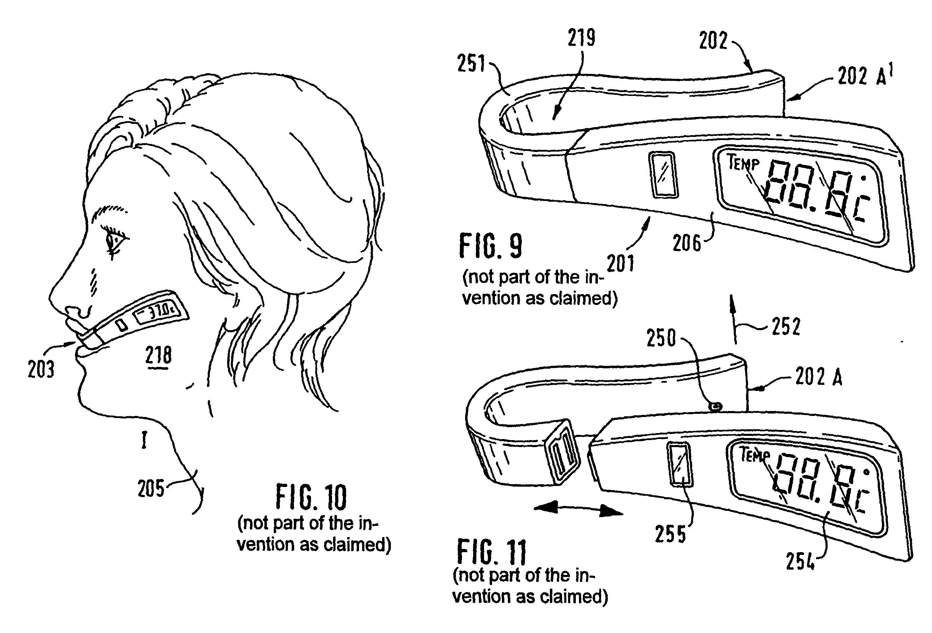

Fig. 8 to Fig. 22 present attachment devices and modifications thereof which are not part of the invention as claimed.

An arrangement 1, which is intended to be capable of attaching an object 2, such as a measuring device in the form of, for example, a thermometer 2A, a sensor 2B, a probe 2C, a tube 2D or some other similar object for a variety of purposes in the area of health care, in the mouth 3, nose 4 or some other orifice of a person 5 or some other individual, comprises a pressure part 6 in accordance with the present invention. Said pressure part 6 is so arranged as to be capable of being applied externally around the body 7 of an individual and exhibits an attachment part 8, which is so arranged preferably as to be capable of separable attachment to an object 2 of the kind in question. The pressure part 6 is so arranged, through interaction with said object 2 or with a counter-pressure device attached to the pressure part 6, as to cause the attachment of the object 2 in question.

The pressure part 6, which can consist of flexible material such as rubber, plastic or a similar material, preferably exhibits an attachment part 8 at one end 6A. An attachment part 8 can be formed, for example, by a channel 9 passing through the pressure part at an angle, which channel has an opening 10 at the rear edge surface 11 of the pressure part and an opening 12 discharging onto a contact surface 13 which, in its active attachment position I, is capable of being placed in contact with the skin 14, etc., along one edge 3A of the mouth 3 in question or some other orifice of a person 5 concerned or some other individual, for example an animal.

With a view to further improving contact between the pressure part 6 and the skin 14 of a person, the contact surface of the pressure part can exhibit friction-increasing means 15, for example corrugations or adhesive, etc.

Said attachment part channel 9 extends along a plane 16, which preferably lies essentially parallel with, or extends at a small angle X in relation to a plane 17, which runs along the other opposite end 6B of the pressure part in the event of said plane 16, 17 diverging in a direction away from the front part 6B of the pressure part towards its rear part 6A.

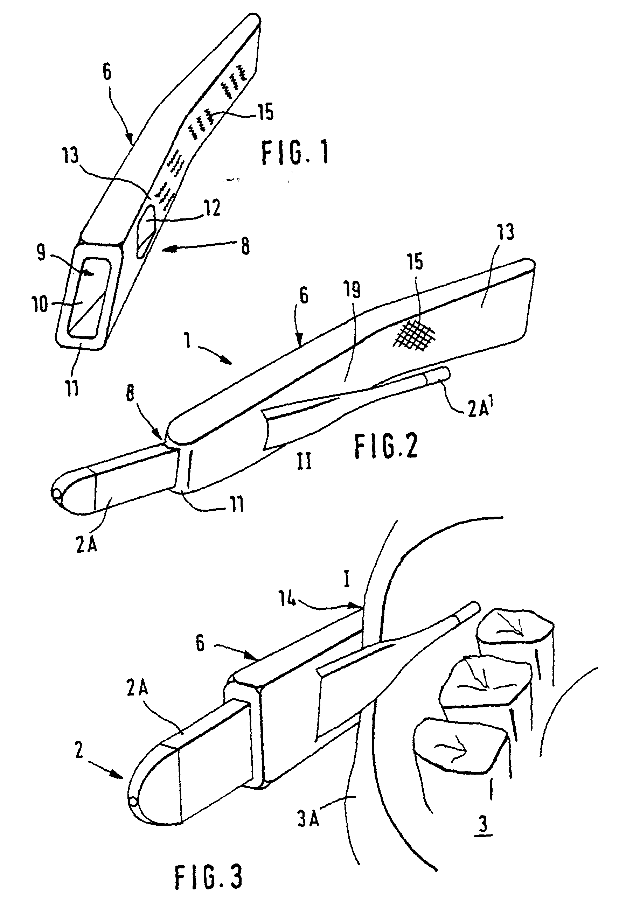

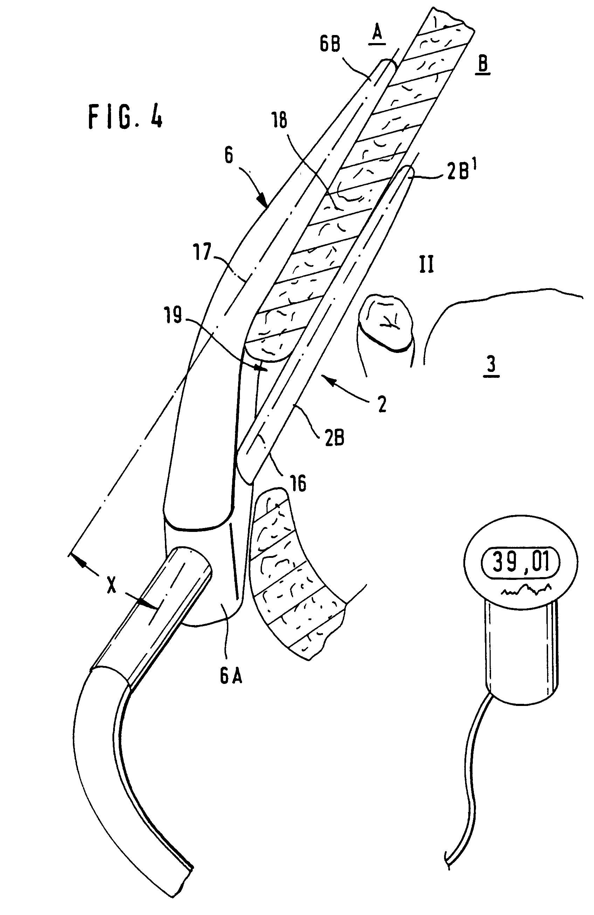

A thermometer 2A, a sensor 2B or some other object 2 which it is wished to attach in position on a patient can thus be inserted initially with its measuring tip 2A'; 2B' via the accommodating opening 10 in the channel 9, and can then finally project into position II ready for attachment, as illustrated in Figs. 2 and 4. Said pressure part 6 and thermometer 2A, sensor 2B or part thereof will each act, for example when the invention is applied for the oral measurement and recording of the temperature of a patient, from either side A or B, i.e. externally against a cheek and internally in the mouth 3 against the inside of the cheek, so that the cheek 18 or other skin of the patient is accommodated in the intended space 19 between said pressure part 6 and object 2, etc., with at least a little clamping effect between them.

Said attachment part 8 can also be divided, so that the thermometer 2A, etc., can be introduced sideways against the pressure part 6, for example in the form of spring-assisted edge devices of the pressure part 6, although this is not shown in the drawings, or in the form of other suitable and easily applicable attachment parts.

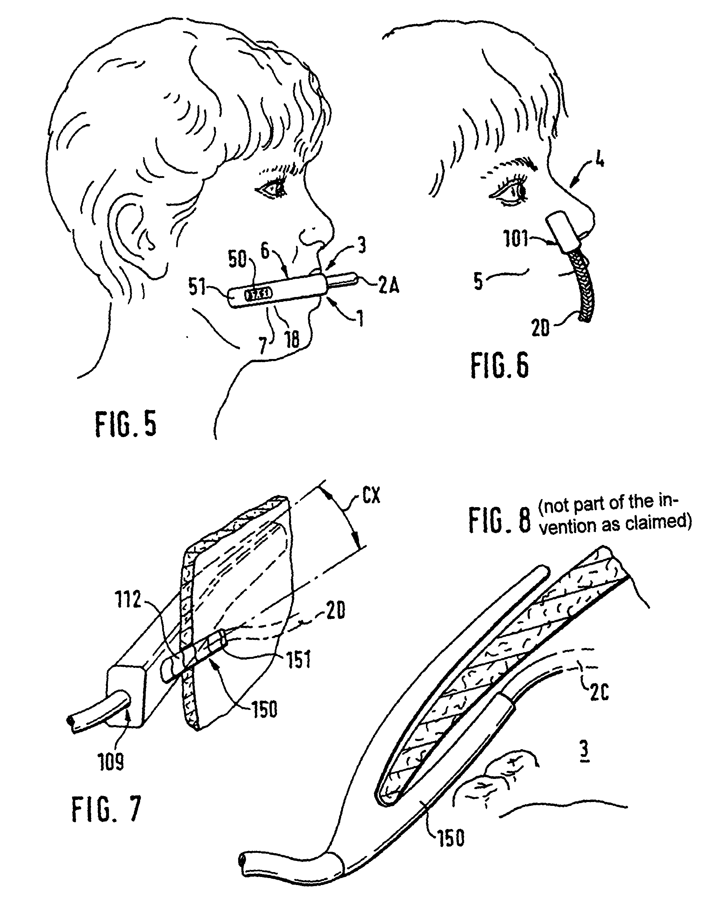

Illustrated in Fig. 6 is the manner in which a tube 2D, can be securely attached to the nose 4 of a patient 5 with the help of an arrangement 101 in accordance with the invention, although preferably of a smaller size than an arrangement 1, which is capable of application to a mouth 3 in accordance with the foregoing, but using a similar method.

One embodiment of an attachment means for a tube 2D, probe 2C, etc., may involve causing a counter-pressure part 150, preferably separate from the intended object 2 and connected to the pressure part 106, to extend from one side 113 of a pressure part 106. The counter-pressure part 150, which projects at an acute angle CX from the pressure part 106 at one opening 112 in an attachment part channel 109 or some other attachment part, may exhibit a part 151 preferably capable of interacting with the peripheral form of the tube 2D or some other object 2 intended for attachment, against which section the object is in contact from inside the pressure part 106.

In the case of an object 2 of the kind in question, which it is wished to attach, consisting of an instrument for measuring temperature or some other measuring instrument, it is possible for a previously disclosed measurement result display 50 to be arranged on the pressure part 6 itself. A display of this kind is preferably so arranged on the side 51 of the pressure part facing away from the individual 5 that the nursing care staff can easily read the measurement result without the need to remove the measurement object 2 from the mouth 3, etc., of the patient.

Figs. 9-13 illustrate a further example of an arrangement 201 intended to permit the attachment of a measurement thermometer 202 or some other measuring instrument or object preferably in the mouth 203 of a person 205, etc. For this purpose the intended body temperature measuring instrument 202 is preferably executed in separable form, i.e. with an outer part 206, which is intended to be capable of functioning as a pressure part 206 capable of being applied externally around the mouth 203 and acting against the cheek 218, and with an inner part 202, which consists of the measurement part 202A and accommodates the actual temperature sensor 250 at its inner measuring tip 202A¹. Said inner part 202 is intended, when accommodated inserted into the mouth 203 for the oral measurement and recording of the temperature of a patient, to make contact with the inside of said cheek and to act with a pressing effect against the external pressure part 206 which is capable of being placed externally in contact around the cheek. In this way each of the two parts 206 and 202 will act from its own side, i.e. externally against a cheek or internally inside the mouth against the inside of said cheek, with the skin of the cheek 218 accommodated in the accommodating space 219 between said pressure part 206 and the measurement object 202. A certain clamping effect is achieved in this way between the parts 206, 202, thanks to a connecting piece 251 running between them, in order to achieve the desired clamping function, yet without causing discomfort through an excessively high contact pressure between the parts 202, 206.

The form of said measurement object 202 is appropriately such that no discomfort is felt by the patient when the arrangement is in use, and it is advisable to execute the parts with soft, curved forms, for example as shown in the drawings in Figs. 9-11, in conjunction with which a curved form is imparted to said interjacent connecting piece 251 so as to enable it to pass between the lips at the corner of the mouth of a person 205 who intends to use the invention. The innermost measurement part 202A¹ is for this purpose preferably curved in a direction 252 away from the intended external pressure part 206 so as to avoid causing damage to the sensitive mucous membranes of the mouth through abrasion when taking measurements, as well as when introducing the arrangement 201 into and removing it from the mouth 203.

Said actual measurement object 202 can be made of plastic or of some other suitable material with a thermistor 250A (resistance) embedded therein, immediately beneath the surface of the measurement object 202, in order to permit the rapid absorption of the prevailing temperature of the mucous membrane pressing against it at the time of measurement. The thermistor 250A is preferably positioned at the centre of the object 202 in order to prevent air from being able to circulate past the thermistor during the actual temperature sensing and recording and to interfere with the measurement result as it does so.

Said measurement object 202 may be executed and produced in such a way as to be readily detachable from or attachable to an external part 206 of said kind. A connecting piece 252 between the parts 202, 206 can be provided for this purpose, which permits the separation of the objects 202, 206 from one another, for example after measurements performed on a family or at a hospital, etc., where each of the members of the family, etc., should preferably have his/her own personal measurement object 202, which can be assembled at the time of measurement to an external pressure part 206 of said kind on a shared outer part of the arrangement.

Said connecting piece 252 can be executed as a combined contact and retaining part for the purpose of being able to transfer temperature information via wires 253 from the thermistor 250A to a display panel 254 situated on the pressure part 206 which is capable of separable attachment. The connecting piece 252, which in this case functions as an attachment piece, can be, so arranged in a previously disclosed fashion as to transfer current internally at the point of connection between the parts without being subjected to interference by external conditions, and as to be capable of functioning reliably without the risk of free play or undesired disconnection of the parts 202, 206 from one another.

A battery or solar cells, etc., for powering the thermometer can be present internally inside or on said part 206, and a preferably waterproofed actuating control, for example a button 255, can be present on the part 206, respectively for switching on and switching off the measurement and display function of the thermometer; a button 255 sealed with a rubber gasket so as to withstand liquid during cleaning may be used, for example.

By causing the parts 202, 206 to move in the direction of the arrows in Fig. 11 the parts are connected together or are separated from one another.

It must also be pointed out that said internal and external parts 202, 206 can be integrated with one another if this is considered appropriate.

The arrangement 301 shown in Fig. 14 for the secure attachment of a tube or a probe 302DC, for example to the nose of a person, may consist of a unit comprising a pressure part 306 acting externally and a counter-pressure part 350 acting internally inside a body cavity. An attachment object 302DC of the intended kind is intended to be capable of readily separable attachment to said internal counter-pressure part 350, for example in a matching laterally open channel 351, for example as illustrated in Fig. 14. In the case of, for example, a counter-pressure part 350 capable of being introduced into a nostril and a pressure part 306 capable of being applied externally against the nostril, the arrangement 301 is clamped effectively onto a probe or tube, etc., 302DC extending preferably in a straight line along an accommodating channel 351 and a counter-pressure part 350. Grooves 352, etc., or other means of increasing friction may be present in this case on the parts 350, 306 in order to increase the gripping interaction with a nostril.

Illustrated in Figs. 15 and 16 is a further example of an attachment arrangement 401 for a tube or probe, etc., 402DC, in which an external pressure part 406 and an internal counter-pressure part 450 are attached to one another via a connecting part 453, which, although it resembles the probe/tube attachment arrangement 301 in accordance with Fig. 14, has lateral guide devices 475 for a tube or probe, etc., 402DC. For example, said lateral guide devices may consist of a slot-shaped opening arranged in a tongue-shaped elongated part 476 of the pressure part 406. This permits the introduction from the side of the attachment arrangement 401 of the object 402DC, which is clamped securely by means of, for example, a longitudinal slot 451 in the rear part 452 of the counter-pressure part 450 and is introduced laterally in the direction of the arrow 477 into a lateral slot 478 in the elongated part 476 so as to be retained in an internal cavity 479, in those cases in which it is wished to join a securely held tube or probe, etc., 402DC. A nose clamp of this kind, for example, is so arranged as to grip the nostril of a person with said pressure parts 406, 450 situated respectively on the outside and on the inside of one wing of a nose accommodated in a space 480 between the parts 406, 450. In this case the grooves 452 situated internally in the space 480 serve to increase the gripping interaction with the nose and to prevent the arrangement 401 from being pulled out in the direction of withdrawal 481.

The invention is also suitable for use in the event of it being wished to introduce more than one object into the intended orifice, for example if it is wished for not only a thermometer and a probe, but also tubes to be introduced into and accommodated in, for example, the mouth or the nose of a patient, since it is not restricted to being used only for one object at a time, but one, two or more objects can naturally be attached at the same time to one and the same arrangement in accordance with the foregoing, in which case attachment of the objects in question is so arranged as to be capable of being executed in any sequence, including with the arrangement in an effectively attached position I.

Fig. 17 shows examples of an attachment arrangement 501 for both a mouth probe and a nasal probe, etc. An arrangement 501 of this kind comprises at least pairs of attachment parts 580, 581 facing away from one another, each of which, like the above examples, is also provided with an outer pressure part 506 and an inner counter-pressure part 550, as well as a connecting part 553 joining together same. A connecting bar 583 extending between said attachment parts 580, 581 situated at a mutual distance from one another connects said parts 580, 581 to one another. This makes it possible to grip the edge part of an orifice with said pairs of pressure parts 506 and counter-pressure parts 550 in such a way that it is accommodated in said accommodating space 519. The corners of a person's mouth, for example, can be accommodated therein. In order to fit between the edges of a mouth or other orifice, the length 50L of said bar 583 can be adapted so as to fit the desired width of the orifice, i.e. several attachment arrangements 501 with a different length 50L can be included in a selection of arrangements.

In an attachment part 508 preferably situated centrally on said bar 583, an opening extending preferably from one side 584 of the attachment bar 583, into which, for example, a mouth probe can be introduced from, for example, said side 584 of the bar 583. The width of said opening 508 in the accommodating area may, for example, be as much as approximately 10 mm.

A number of further openings 508A, 508B can extend across said opening 508 from the side 585 of the bar as far as approximately the centre line of said bar. Said further opening can be adapted for small tubes and probes and for that reason exhibits a smaller diameter than the opening 508.

The function of this arrangement 501 should be obvious from its execution.

The breathing mask 602 illustrated in Fig. 18 exhibits an attachment arrangement 601 for securing the mask 602 close to the mouth 603 and nose 604 of a person 605, by so doing avoiding the need to use a string around the neck of the person 605, which can be difficult in many cases, for example where damage to the neck is present. The attachment arrangement 601 can be formed preferably from pairs of spring-assisted tongues 650 providing counter-pressure facing away from one another, which are intended to act against the inside of the wearer's cheeks in the mouth, preferably in the vicinity of the corners of the mouth. The mask 602 is thus in essentially close contact with the wearer's face with its peripheral edge 651 serving as an external pressure part, whilst the attachment arrangement 601 is clamped against the inside of the mouth, thereby effectively retaining the mask 602 in position without the need to hold the mask 602 with the hands. A connection 652 on the mask 602 permits the passage of air or some other respiratory gas, for example in the case of mouth-to-mouth life-saving, and the administration of oxygen, etc.

Fig. 19 shows a protective mask 702 of the type which is used, for example, by tradesmen to protect against breathing in impurities and similar undesired particles. This mask 702 is also provided with an attachment arrangement 701 in the form of preferably spring-assisted tongues 750, which make contact from inside the mouth, etc., with the wearer's cheeks at the intended orifice, for example the mouth 703. The protective mask 702 is thus able to function without causing discomfort to the wearer 705, who is even able to speak without being obstructed by the mask 702, in spite of the presence of the mouth-accommodating attachment arrangement 701, which is caused to be pressed from the outside in the area of the peripheral edge 751 against the face of the wearer around the mouth 703 and the nose 704.

Fig. 20 shows a side view of a mask 802. Apart from an attachment arrangement 801 in the form of pairs of tongues 850 capable of being introduced into the mouth and exerting counter-pressure against a centrally situated connection sleeve 852, and that mouth-opening means 875 are present on the mask 802 in order to permit the mouth of anaesthetized persons, for example, to be kept open so that they do not bite through tubes and probes, etc., or that life-saving, etc., can be performed readily on persons without the need to hold their mouth open. Two stays 878, 879 with a spring bias in a direction 876, 877 away from one another thus cause the mouth of the wearer to be held open when the mask 802 is pressed in the area of its peripheral edge 851 against the face of the wearer.

Finally, the principle of securing a probe holder 902 and 1002 by means of an attachment arrangement 901 and 1001 of a kind similar to that shown in the illustrative embodiment which relates to Fig. 17 is illustrated in Figs. 21 and 22. A tongue holder 980, which is formed from a curved bar, and which is accommodated in a manner permitting its displacement to adjust it to the desired length in a matching, tunnel-like opening 981 in the holder 902, permits the tongue to be kept out of the way when the probe holder 902 in question is in use, whilst a bite block 1082 in another embodiment of the probe holder 1002 prevents the biting-through of any probes 1080 or tubes, etc., which have been introduced via the mouth of the patient in question, essentially when they are unconscious, for instance anaesthetized.

Present at the sides of said probe holder 902; 1002 are pairs of outer pressure parts 906; 1006 and pairs of inner pressure parts 905; 1050, such that the corners of the mouth and the cheeks of a person can be accommodated in an interjacent accommodating space 919; 1019 in accordance with the principle described previously.

The invention is also suitable for use in the remote transmission of measurement results, e.g. by wireless means.

## Claims

1. An attachment device for holding an elongated clinical object (2) such as a thermometer (2A) or a tube (2D), said attachment device comprising a pressure part (6) and an attachment part (8), said attachment part (8) is formed by a channel (9) passing through one end (6A) of the pressure part (6), the channel (9) extending in relation to an opposite end (6B) of said pressure part (6) to form a space (19) between said opposite end (6B) of said pressure part (6) and a plane (16) extending along said channel (9),
**characterized in that** the pressure part (6) exhibits friction-increasing means (15) at a contact surface (13) to the skin (14) of an individual.

2. An attachment device in accordance with claim 1,
**characterized in that** the channel (9) extends parallel with or at a small angle (X) in relation to said opposite end (6B) of said pressure part (6).

3. An attachment device in accordance with claim 1 or 2,
**characterized in that** at least the pressure part (6) consists of a flexible material.

## Patentansprüche

1. Befestigungsvorrichtung zum Halten eines länglichen klinischen Gegenstandes (2) wie ein Thermometer (2A) oder einen Schlauch (2D), wobei die Befestigungsvorrichtung ein Andruckteil (6) und ein Befestigungsteil (8) aufweist, wobei das Befestigungsteil (8) durch einen sich durch ein Ende (6A) des Andruckteils (6) erstreckenden Kanal (9) gebildet ist, wobei der Kanal (9) sich so in Bezug auf ein gegenüberliegendes Ende (6B) des Andruckteils (6) erstreckt, dass ein Zwischenraum (19) zwischen dem gegenüberliegenden Ende (6B) des Andruckteils (6) und einer sich entlang des Kanals (9) erstreckenden Ebene (16) gebildet ist, **dadurch gekennzeichnet, dass** das Andruckteil (6) reibungserhöhende Mittel (15) an einer Kontaktoberfläche (13) mit der Haut (14) eines Individuums aufweist.

2. Befestigungsvorrichtung nach Anspruch 1, **dadurch gekennzeichnet, dass** sich der Kanal (9) parallel oder unter einem kleinen Winkel (X) zu dem gegenüberliegenden Ende (6B) des Andruckteils (6) erstreckt.

3. Befestigungsvorrichtung nach Anspruch 1 oder 2, **dadurch gekennzeichnet, dass** wenigstens das Andruckteil (6) aus einem flexiblen Material besteht.

## Revendications

1. Dispositif de maintien pour la fixation d'un objet clinique allongé (2) comme un thermomètre (2A) ou un tube (2D), ledit dispositif de maintien comprenant une partie de pression (6) et une partie de maintien (8), ladite partie de maintien (8) est formée par une ouverture (9) traversant une extrémité (6A) de la partie de pression (6), l'ouverture (9) s'étendant vers une extrémité opposée (6B) de ladite partie de pression (6) de façon à former un espace (19) entre ladite extrémité opposée (6B) de ladite partie de pression (6) et un plan (16) s'étendant le long de ladite ouverture (9), **CARACTÉRISÉ EN CE QUE** la partie de pression (6) présente des moyens de frottement augmenté (15) sur une surface de contact (13) avec la peau (14) d'un individu.

2. Dispositif de maintien selon la revendication 1, **CARACTÉRISÉ EN CE QUE** l'ouverture (9) s'étend parallèlement ou selon un léger angle (X) par rapport à ladite extrémité opposée (6B) de ladite partie de pression (6).

3. Dispositif de maintien selon les revendications 1 et 2, **CARACTÉRISÉ EN CE QU'**au moins la partie de pression (6) est constituée d'un matériau flexible.
